# EUROPEAN PATENT APPLICATION

(11) **EP 4 640 301 A1**
(43) Date of publication of application: **29.10.2025**
(21) Application number: 24189876.6
(22) Date of filing: 19.07.2024
(51) Int. Cl.: B01D 53/86, C01B 21/22

(54) **CATALYST SYSTEM FOR REMOVING PERFLUORINATED COMPOUNDS AND NITROUS OXIDE**

(30) Priority: 26.04.2024 KR 20240055942
(71) Applicant: ENNOPIA, Jincheon-gun, Chungcheongbuk-do 27860 (KR)
(72) Inventor: KIM, Hong Kyoung, 16810 Yongin-si (KR)
(74) Representative: Marks & Clerk LLP

(57) **Abstract**

Provided is a catalyst system capable of removing perfluorinated compounds and nitrous oxide. An exhaust gas is heated in two stages through a heat exchange unit and applied to a heater unit. The heater unit generates a flame to heat the exhaust gas to a high temperature. A catalyst unit is directly connected to a heating space of the heater unit so the heated exhaust gas comes into contact with a catalyst, and the perfluorinated compounds and the nitrous oxide are decomposed in the catalyst unit.

## Description

### CLAIM FOR PRIORITY

This application claims priority to Korean Patent Application No. 2024-0055942 filed on April 26, 2024 in the Korean Intellectual Property Office (KIPO), the entire contents of which are hereby incorporated by reference.

### BACKGROUND

### 1. Technical Field

Example embodiments of the present invention relates to a catalyst system for processing an exhaust gas, and more preferably, to a catalyst system for simultaneously removing perfluorinated compounds and nitrous oxide capable of improving the reaction efficiency with a catalyst and the removal rate of a target gas to be treated through an effective heat exchange action with a processing gas that has passed through the catalyst.

### 2. Related Art

Perfluorinated compounds (PFCs) are substances in which hydrogen in the basic hydrocarbon backbone is replaced with fluorine, and refer to various compounds such as perfluorinated sulfonic acids having 6 or more carbon atoms, perfluorinated fatty acids having 7 or more carbon atoms, and salts thereof. Perfluorinated compounds are mainly used in the semiconductor manufacturing process because the perfluorinated compounds have surfactant properties, are resistant to heat, and exhibit anti-pollution functions. In addition, the perfluorinated compounds are also used as various detergents, etchants, solvents, and raw reaction materials.

However, perfluorinated compounds have been subject to regulations for environmental protection because they are difficult to decompose naturally and have a very high global warming potential. Accordingly, as described in Related Art Document 1 (Korean Patent Publication No. 2004-0024775), research is continuously being conducted to effectively treat exhaust or waste gases including perfluorinated compounds.

Direct combustion, plasma decomposition, catalytic decomposition methods and the like have been used as methods for removing perfluorinated compounds. The mainly used catalytic decomposition method shows high decomposition efficiency and has the advantage of lowering device corrosion compared to other methods. However, there is a problem in that nitrogen oxides such as nitrous oxide (N₂O) generated during the decomposition process must be treated separately. Nitrous oxide is also included in the effluent generated during the semiconductor manufacturing process, and is known to be a powerful global warming agent having a global warming potential that is over 300 times that of carbon dioxide. Therefore, there is a need to develop technology capable of simultaneously treating perfluorinated compounds and nitrous oxide.

To solve this problem, Related Art Document 2 (Korean Patent No. 10-2497527) discloses a system capable of simultaneously removing perfluorinated compounds and nitrous oxide, wherein the perfluorinated compounds and the nitrous oxide may be efficiently decomposed at the same time. However, this system has the disadvantage of increasing heat loss while the gas heated in the heater unit moves through a pipe to the catalyst unit, thereby increasing power and heater load. Accordingly, this needs to be improved.

In order to address the above problems, the applicant of the present invention has developed a structure in which a heater unit is used as an electric heater and catalysts are stacked vertically in a cumulative manner using partitions. However, when the catalysts are stacked vertically in a cumulative manner, the decomposition rate of the waste gas is improved, but the airflow of the waste gas is not smooth, thereby causing limitations on the processing capacity of the waste gas. To solve this problem, the size of the catalyst system must be increased, but it is very difficult to apply a catalyst system with an increased size due to the limited space in manufacturing lines.

### [Related Art Documents]

### [Patent Documents]

Korean Patent Publication No. 2004-0024775

Korean Patent No. 10-2497527

### SUMMARY

Accordingly, example embodiments of the present invention are provided to substantially obviate one or more problems due to the limitations and disadvantages of the related art.

Example embodiments of the present invention provide a catalyst system capable of effectively raising the temperature of a target gas to be treated and effectively removing perfluorinated compounds and nitrous oxide.

In some example embodiments, a catalyst system includes a heat exchange unit configured to raise the temperature of a first exhaust gas, which includes perfluorinated compounds and nitrous oxide, in two stages to form a second exhaust gas; a heater unit into which the second exhaust gas is introduced and in which the temperature of the second exhaust gas is raised by a flame to form a third exhaust gas; and a catalyst unit integrally formed with the heater unit and configured to remove the perfluorinated compounds and the nitrous oxide in the third exhaust gas to form a first processing gas, wherein the first processing gas is introduced into the heat exchange unit, and the outflow directions of the first exhaust gas and the second exhaust gas, which are introduced into the heat exchange unit, are opposite to each other.

In other example embodiments, a catalyst system includes a heat exchange unit configured to raise the temperature of a first exhaust gas, which includes perfluorinated compounds and nitrous oxide, in two stages to form a second exhaust gas; a heater unit into which the second exhaust gas is introduced and in which the temperature of the second exhaust gas is raised by a flame to form a third exhaust gas; a catalyst unit integrally formed with the heater unit and configured to remove the perfluorinated compounds and the nitrous oxide in the third exhaust gas to form a first processing gas; an inner housing in which a heating part of the heater unit and the catalyst unit are installed; and an outer housing which is installed outside the inner housing and to which a flame forming part of the heater unit is coupled, wherein an insulating material is filled between the outer housing and the inner housing, and an exhaust gas supply part of the heater unit is installed between the inner housing and the inner housing to supply the second exhaust gas to the heating part.

### BRIEF DESCRIPTION OF DRAWINGS

Example embodiments of the present invention will become more apparent by describing in detail example embodiments of the present invention with reference to the accompanying drawings, in which:
FIG. 1 is a top perspective view schematically showing a catalyst system for simultaneously removing perfluorinated compounds and nitrous oxide according to a preferred example embodiment of the present invention;
FIG. 2 is a side cross-sectional view for explaining the operation of a heater unit and a catalyst unit of FIG. 1 according to a preferred example embodiment of the present invention;
FIG. 3 is a side cross-sectional view showing the catalyst unit according to a preferred example embodiment of the present invention;
FIG. 4 is another cross-sectional view for explaining the operation of a catalyst unit according to a preferred example embodiment of the present invention;
FIG. 5 is a perspective view showing a heat exchange unit according to a preferred example embodiment of the present invention;
FIG. 6 is a perspective view showing a heat transfer plate of FIG. 5 according to a preferred example embodiment of the present invention;
FIG. 7 is a cross-sectional view taken along line AA' of the shape in which two heat transfer plates of FIG. 6 are joined together according to a preferred example embodiment of the present invention; and
FIG. 8 shows cross-sectional views taken along line BB' and line CC' of the shape in which two heat transfer plates of FIG. 6 are joined together according to a preferred example embodiment of the present invention.

### DESCRIPTION OF EXAMPLE EMBODIMENTS

While the present invention is susceptible to various modifications and alternative forms, specific embodiments thereof are shown by way of example in the drawings and will be described in detail hereinafter. It should be understood, however, that there is no intent to limit the invention to the particular forms disclosed, but on the contrary, the present invention covers all modifications, equivalents, and alternatives falling within the spirit and scope of the present invention. Like numbers refer to like elements throughout this specification.

Unless otherwise defined, all terms (including technical and scientific terms) used herein have the same meaning as commonly understood by one of ordinary skill in the art to which the present invention belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

It will be understood that when an element such as a layer, a region, or a substrate is referred to as being "on" another element, it may be present directly on the another element or other component(s) may be interposed therebetween.

Although terms such as "first," "second," and the like may be used to describe various elements, components, regions, layers and/or regions, it should be understood that the elements, components, regions, layers and/or regions should not be limited by these terms.

Hereinafter, example embodiments of the present invention will be described in further detail with reference to the accompanying drawings.

### Embodiments

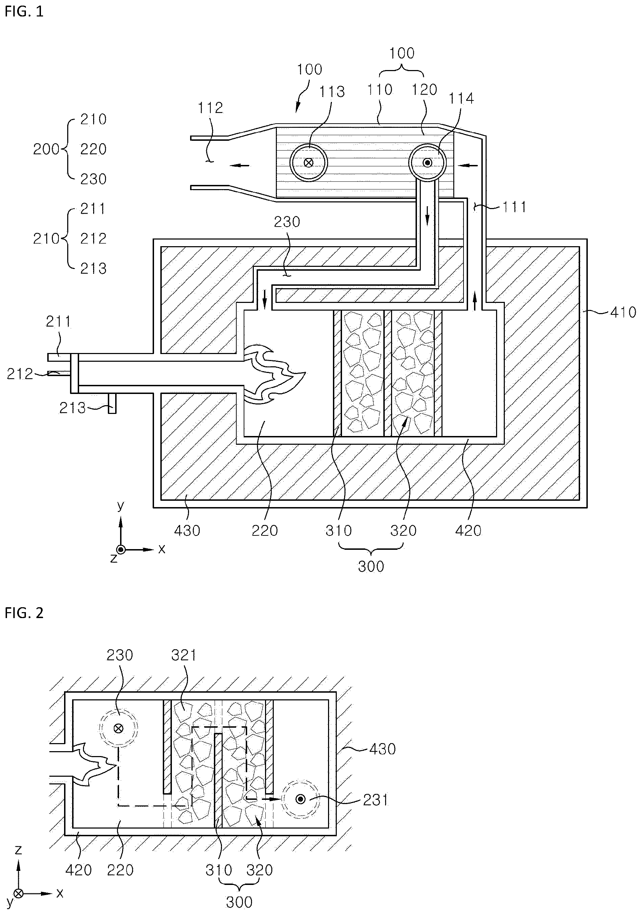

FIG. 1 is a top perspective view schematically showing a catalyst system for simultaneously removing perfluorinated compounds and nitrous oxide according to a preferred example embodiment of the present invention.

Referring to FIG. 1, the catalyst system includes a heat exchange unit 100, a heater unit 200, and a catalyst unit 300.

Target gases to be treated, such as a room-temperature first exhaust gas and a treated first processing gas, are introduced into the heat exchange unit 100. Through the heat exchange action, the temperature of the first exhaust gas is raised in two stages to form a second exhaust gas, and the second exhaust gas is introduced into the heater unit 200. In the present invention, the symbols ⊙ and ⓧ are used to indicate the airflow. The symbol O means that the airflow flows out in a vertical direction from the ground, and the symbol ⓧ means that the airflow flows in in a vertical direction from the ground.

The heater unit 200 heats the second exhaust gas to a high temperature through a flame to form a third exhaust gas. The third exhaust gas is introduced into the catalyst unit 300, and the catalyst unit 300 removes perfluorinated compounds and nitrous oxide from the third exhaust gas to form a first processing gas. The first processing gas is input to the heat exchange unit 100 and forms a second processing gas whose temperature is reduced through a heat exchange action. The second processing gas is discharged through a pipe.

The first processing gas has a temperature range of 650°C to 740°C, and the second processing gas has a reduced temperature ranging from 230°C to 280°C.

The heat exchange unit 100 has a form in which a plurality of heat transfer plates 120 are disposed within a heat exchange housing 110. The first processing gas is introduced through a processing gas inlet 111, and the second processing gas whose temperature is reduced while passing through the heat transfer plates 120 is discharged through a processing gas outlet 112. Also, the room-temperature first exhaust gas is introduced into a space between the heat transfer plates 120 through an exhaust gas inlet 113 and heated to the temperature of the second exhaust gas. Thereafter, the first exhaust gas is discharged through an exhaust gas outlet 114.

The first exhaust gas is at room temperature, and the heated second exhaust gas has a temperature range of 470°C to 520°C. That is, the second exhaust gas has a higher temperature than the second processing gas and has higher heat exchange efficiency.

The heater unit 200 and the catalyst unit 300 are integrally formed and may be configured within a single housing that accommodates the heater unit 200 and the catalyst unit 300. That is, in the present invention, the heater unit 200 and the catalyst unit 300 are accommodated in a single housing without any separate inner piping. In particular, the housing has an outer housing 410 and an inner housing 420. Also, an insulating material 430 is filled between the outer housing 410 and the inner housing 420. The insulation effect of the catalyst unit 300 installed in the inner housing 420 is enhanced due to the two housings 410 and 420 and the insulating material 430 interposed therebetween. That is, the catalyst unit 300 is installed within the inner housing 420 to minimize a phenomenon of heat being released to the outside of the equipment.

The heater unit 200 is formed across the outer housing 410 and the inner housing 420 and has a flame forming part 210, a heating part 220, and an exhaust gas supply part 230.

The flame forming part 210 is provided in a form in which it is coupled to the outer housing 410, and has a burner 211, a fuel supply pipe 212, and an oxygen supply pipe 213. A gaseous fuel, such as LNG, is supplied through the fuel supply pipe 212, and oxygen or atmospheric gas is supplied through the oxygen supply pipe 213. The gaseous fuel is combusted by the burner 211, the flame is maintained by the supplied oxygen or atmospheric gas, and the flame is introduced into the heating part 220. The flame forming part 210 is preferably provided in a form attached to the outer housing 410, and the flame is supplied to the heating part within the inner housing 420 through a flame passage.

The heating part 220 is defined as a heating space provided in a form surrounded by the inner housing 420. The exhaust gas supply part 230 is connected to the heating part 220, and the second exhaust gas supplied through the exhaust gas supply part 230 is heated with a flame to form a third exhaust gas. The third exhaust gas has a temperature ranging from 750°C to 800°C.

The exhaust gas supply part 230 is formed in a space between the inner housing 420 and the outer housing 410. The space is filled with the insulating material 430. The exhaust gas supply part 230, which is provided in the form of a pipe between the insulating materials 430, minimizes heat loss due to the insulating material 430. The second exhaust gas is supplied through the exhaust gas supply part 230, and the second exhaust gas is introduced into the heating part 220.

The catalyst unit 300 is directly connected to the heating part 220 and installed in the inner housing 420. The catalyst unit 300 has a plurality of partitions 310 and a catalyst aggregate 320. The partitions 310 are disposed a predetermined distance apart, and the catalyst aggregate 320 composed of catalyst particles is disposed between the partitions 310.

A space is formed between the catalyst particles, the third exhaust gas flows through the space, perfluorinated compounds and nitrous oxide are decomposed through a catalytic reaction, and a first processing gas is formed. The first processing gas is in a relatively high temperature state and is introduced into the heat exchange unit 100.

Through the heat exchange action in the heat exchange unit 100, the temperature of the first processing gas is reduced to form a second processing gas, and the second processing gas is allowed to flow to a cooler. By reducing the temperature of the first processing gas, the temperature of the first exhaust gas is raised in two stages to form a second exhaust gas.

FIG. 2 is a side cross-sectional view for explaining the operation of the heater unit and the catalyst unit of FIG. 1 according to a preferred example embodiment of the present invention.

Referring to FIG. 2, the heating part 220 of the heater unit and the catalyst unit 300 are installed in the inner housing 420, and the outside of the inner housing 420 is filled with the insulating material 430. The second exhaust gas is introduced through the exhaust gas supply part 230, and the flame formed in the flame forming part is introduced into the heating part 220. The second exhaust gas is introduced from the upper side of the inner housing 420. When the second exhaust gas is introduced from the upper side or top of the inner housing 420, the temperature may quickly increase due to the flame introduced into the heating part 220, and the temperature difference with the third exhaust gas heated in the heating part 220 may be minimized.

The heating part 220 is defined by the inner housing 420 and the catalyst unit 300, and the temperature of the second exhaust gas is rapidly raised by the flame within the heating part 220 to form a third exhaust gas having a temperature range of 750°C to 950°C.

The third exhaust gas is introduced into the catalyst unit 300. The catalyst unit 300 is composed of the partitions 310 and the catalyst aggregate 320, and the catalyst unit 300 is directly connected to the heating part 220. The partitions 310 constituting the catalyst unit 300 have a shape in which the upper or lower portion is open and have a structure that guides the airflow introduced into the lower portion toward the upper portion or guides the airflow introduced into the upper portion toward the lower portion. That is, the partitions 310 have an open shape arranged in a zigzag pattern in a vertical direction and allow the third exhaust gas to come into contact with the catalyst particles as much as possible.

Also, when the exhaust gas supply part 230 is installed on the upper portion of the heating part 220, the partitions 310 that initially accommodate the third exhaust gas have a shape that is open at the bottom. The second exhaust gas introduced from the upper portion of the heating part 220 through the partitions 310 is heated while moving from the upper portion to the lower portion of the heating part 220 and introduced into a lower portion of the catalyst unit 300. When the exhaust gas supply part 230 is installed on the lower portion of the heating part 220, the partitions 310 that initially accommodate the third exhaust gas have a shape that is open at the bottom

The partitions 310 are disposed perpendicular to the lower or upper surface of the inner housing 420 to induce the airflow to move up and down in a zigzag pattern.

The catalyst aggregate 320 is disposed between the partitions 310. In order to prevent the catalyst particles 321 of the catalyst aggregate 320 from being detached through an open region between the partitions 310 and the inner housing 420, the catalyst aggregate 320 may be provided in a state in which the catalyst aggregate 320 is accommodated within a mesh.

The catalyst aggregate 320 is composed of a plurality of catalyst particles 321. The perfluorinated compounds and nitrous oxide are decomposed as the third exhaust gas flows through the space between the catalyst particles 321, and the first processing gas is formed. The following reaction occurs due to the contact between the catalyst particles 321 and the third exhaust gas.
- CF₄ Decomposition Reaction: CF₄+2H₂O → 4HF+CO₂
- N₂O Decomposition Reaction: 2N₂O → 2N₂ + O₂

That is, the perfluorinated compounds and nitrous oxide in the third exhaust gas may be removed by being respectively converted into hydrogen fluoride (HF), nitrogen (N₂) and the like while passing through the catalyst unit 300. In particular, the decomposition reaction due to the catalyst particles 321 may occur smoothly due to the high-temperature third exhaust gas.

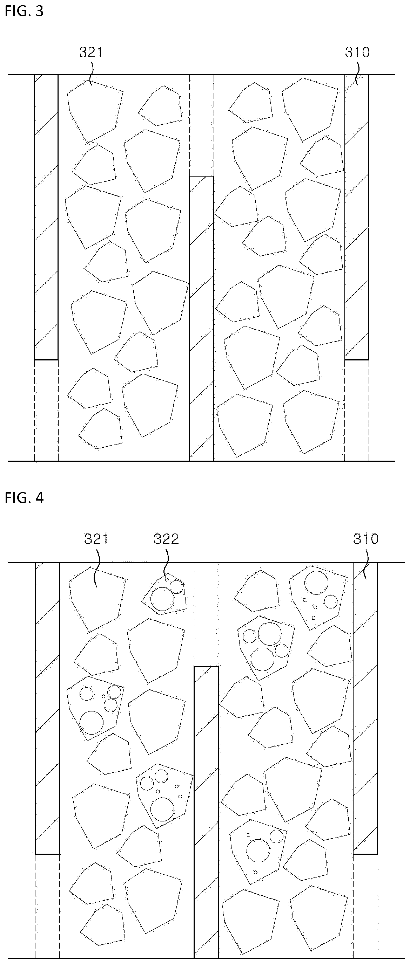

FIG. 3 is a side cross-sectional view showing the catalyst unit according to a preferred example embodiment of the present invention.

Referring to FIG. 3, the catalyst unit has partitions 310 and a catalyst aggregate 320. The partitions 310 are made of a highly corrosion-resistant material such as an SUS material, and have an open space adjacent to the upper or lower region of the inner housing. The third exhaust gas is introduced into the catalyst aggregate 320 through the open space. Also, the catalyst aggregate 320 is composed of catalyst particles 321 filled between the partitions 310 spaced apart from each other.

Specifically, the catalyst particles 321 may include zinc aluminate, a perovskite oxide, and a binder. That is, when the catalyst particles 321 are composed of a single catalyst in which a perovskite oxide containing lanthanum (La) and strontium (Sr) is mixed with zinc aluminate, the catalyst particles 321 may simultaneously decompose the perfluorinated compounds and nitrous oxide without generating by-products such as carbon monoxide due to the stable catalytic activity maintained even in a redox atmosphere, and have excellent thermal and chemical stability at high temperatures, which makes it possible to maintain the perfluorinated compound and nitrous oxide removal performance for a long time.

The zinc aluminate (ZnAl₂O₄) may be used with an atomic ratio of aluminum (Al):zinc (Zn) of 2:1. The zinc aluminate may be manufactured by a conventional manufacturing method such as direct impregnation of γ-alumina using a zinc precursor, a precipitation method by pH regulation, or the like. Preferably, the zinc aluminate may be manufactured by first mixing boehmite, which is a γ-alumina precursor, and a zinc precursor to obtain a mixture and then heat-treating the mixture. The zinc aluminate manufactured by this method has a high endothelial toxicity effect, and may be used for a longer period of time than existing catalysts that are difficult to use for a long period of time and require frequent replacement.

The zinc precursor may be at least one selected from zinc sulfate hydrate [ZnSO₄H2O], zinc acetate [(CH₃CO₂)₂Zn], zinc nitrate [Zn(NO₃)₂], all of which contain zinc. Also, boehmite is an aluminum oxide hydroxide represented by the chemical formula AlO(OH), and boehmite is commonly used as a γ-alumina precursor. When bayerite or Trierite is used in addition to the boehmite, the endothelial toxicity effect cannot be expected, and the endothelial toxicity effect may be maximized only when boehmite is used. When the boehmite is used, the boehmite precursor in the form of a suspension, a sol, or a slurry may be converted into boehmite granules formed as particles or crystals by subjecting the boehmite precursor to heat treatment such as hydrothermal treatment.

The perovskite oxide may be a perovskite oxide represented by the following Compositional Formula 1.

[Compositional Formula 1] LaₓSrₓ₋₁O₃

In this case, in Compositional Formula 1, x may range from 0.4 to 0.8, and may preferably be 0.6.

In Compositional Formula 1, when x is less than 0.4, the crystal structure changes to a cubic, tetragonal, or orthorhombic structure due to the excessive amount of strontium, thereby reducing catalytic activity. On the other hand, when x is greater than 0.8, the perovskite structure may collapse due to the small amount of strontium, which results in significantly reduced catalytic activity and durability.

The perovskite oxide may ensure sufficient thermal stability under high-temperature conditions and chemical stability under various chemical environmental conditions. In fact, the catalyst particles 321 of the present invention containing the perovskite oxide may efficiently control catalyst deactivation by significantly reducing a sintering phenomenon even at a high temperature near 800°C.

The perovskite oxide may be manufactured as an oxide having a perovskite structure by a conventional manufacturing method using a lanthanum precursor and a strontium precursor. At this time, the lanthanum precursor and the strontium precursor may be nitrates, alkoxides, chlorides, hydroxides, oxyhydroxides, carbonates, acetates, oxalates, and mixtures thereof, all of which include lanthanum and strontium.

The binder may be one or more selected from the group consisting of methyl cellulose, hydroxyethyl cellulose, hydroxypropyl methyl cellulose, hydroxyethyl methyl cellulose, methyl ethyl cellulose, carboxymethyl cellulose, hydroxypropyl cellulose, polyvinyl alcohol, polyethylene glycol, polyacrylic acid, polymethyl methacrylate, hydroxypropyl ethyl cellulose, colloidal silica, titania, zirconia, water glass, alumina sol, and inorganic layered compounds.

The catalyst particles 321 may be manufactured by a method which includes: mixing a perovskite oxide, zinc aluminate, and a binder; kneading the mixture, followed by molding; and drying and calcining the molded product.

First, a perovskite oxide, zinc aluminate, and a binder are mixed. Specifically, when the perovskite oxide containing lanthanum (La) and strontium (Sr), zinc aluminate, and a binder are mixed, 4 to 30 parts by weight of the perovskite oxide and 0.5 to 20 parts by weight of the binder may be mixed based on 100 parts by weight of the zinc aluminate. The perovskite oxide may be mixed in an amount of 4 to 30 parts by weight based on 100 parts by weight of the zinc aluminate. When the amount of the perovskite oxide is less than 4 parts by weight based on 100 parts by weight of the zinc aluminate, the catalytic activity for nitrogen oxides such as N₂O may be greatly reduced, which may lead to the problem that the perovskite oxide cannot be used as a composite catalyst. On the other hand, when the amount of the perovskite oxide is greater than 30 parts by weight, a problem may occur in which the catalytic activity for perfluorinated compounds such as CF₄ is greatly reduced.

The binder may be mixed in an amount of 0.5 parts by weight to 20 parts by weight based on 100 parts by weight of the zinc aluminate. When the amount of the binder is less than 0.5 parts by weight based on 100 parts by weight of the zinc aluminate, it is difficult to maintain a constant size and shape due to the phenomenon in which the mixture cracks and breaks when dried after extrusion molding. On the other hand, when the amount of the binder is greater than 20 parts by weight, the specific surface area of the catalyst may be greatly reduced due to the excessive amount of the binder, which may lead to the problem that the catalytic activity is reduced.

Also, in the mixing step in which the perovskite oxide, the zinc aluminate, and the binder are mixed, generally known additives added when preparing a catalyst may be further mixed. These additives may be chosen without any difficulty by those skilled in the art to which the present invention pertains. For example, the additives may be dispersants, plasticizers, lubricants, neutralizing agents, or the like.

Next, the mixture in which the perovskite oxide, the zinc aluminate, and the binder are mixed is kneaded by adding water, and then molded into catalyst particles 321 having a desired shape. At this time, the water may be added in an amount of 5 to 20% by weight based on the total weight of the mixture to ensure smooth kneading of the mixture.

The shape of the catalyst particles 321 according to the present invention may be used by extrusion-molding the kneaded product into a particle or monolith form, or by manufacturing the kneaded product into various forms such as slate, plates, or pellets. When the catalyst particles are actually applied, the catalyst particles may be used by being coated on structures such as honeycombs, metal plates, metal fibers, ceramic filters, metal foams, and the like.

The molded product as described above is dried at 50°C to 150°C for 5 to 72 hours under hot air, constant temperature and humidity conditions using microwaves, and then calcined by heat treatment at 200°C to 400°C for 1 to 6 hours. This step is a process of removing impurities and water used in the manufacture of the catalyst particles and burning glycine to synthesize a phase. By combining these methods, crack-free catalyst particles 321 may be manufactured while improving catalytic activity.

In the catalyst unit 300, the perfluorinated compounds in the third exhaust gas may be removed up to the concentration of hundreds to thousands of ppm, and the nitrous oxide in the third exhaust gas may be removed up to the concentration of hundreds to thousands of ppm. The catalyst particles 321 may have at least one shape selected from a pellet shape and a trilobe shape. Since the present invention uses the catalyst particles 321 having at least one shape selected from a pellet shape and a trilobe shape, when the performance of the catalyst particles 321 filled in the catalyst unit 300 deteriorates in the future, the catalyst particles 321 may be easily replaced, thereby reducing the maintenance costs of the system.

The catalyst particles 321 may have a diameter of 3 mm to 11 mm. Specifically, the catalyst particles 321 may be composed of at least one selected from a pellet-type catalyst having a diameter of 3 mm to 5 mm and a trilobe-type catalyst having a diameter of 9 mm to 11 mm. When the diameter of the catalyst particles is less than 3 mm and the catalyst particles 321 filled in the catalyst unit 300 need to be replaced, dust may be generated due to the small particle size, which makes it difficult to perform replacement. On the other hand, when the diameter of the catalyst particles 321 is greater than 11 mm, the empty space between catalysts with large particles may increase, and the amount of the catalyst particles 321 filled in the catalyst unit 300 may be reduced, which may result in reduced perfluorinated compound and nitrous oxide removal efficiency.

The catalyst aggregate 320 may have a porosity of 40 to 50%. A catalyst aggregate 320 having an appropriate porosity may be used to effectively form a catalytic reaction with the third exhaust gas.

FIG. 4 is another cross-sectional view for explaining the operation of the catalyst unit according to a preferred example embodiment of the present invention.

The configuration of the partitions 310 in the catalyst unit is the same as that described in FIG. 3. However, the catalyst aggregate 320 has airflow control particles 322 in addition to the catalyst particles 321 described in FIG. 3. The airflow control particles 322 may be composed of porous ceramic particles. For example, porous silica, porous alumina, or porous zirconia may be used.

Porous ceramic materials have excellent chemical resistance and are used to control the fluid velocity of the third exhaust gas within the catalyst aggregate. In particular, since the ceramic materials have porosity, the third exhaust gas flows smoothly through the pores in the materials, and thus there is the advantage of maintaining the airflow velocity.

In particular, when the catalyst aggregate 320 is composed of only the catalyst particles 321, a local airflow stagnation or blockage phenomenon may occur within the catalyst aggregate 320. When the catalyst aggregate 320 is composed of a plurality of catalyst particles 321 having the same shape, the morphological characteristics of the catalyst particles 321 or the internal arrangement of the catalyst particles 321 cannot be controlled, and thus the density of the catalyst particles 321 may randomly increase and regions having low porosity may appear. The airflow of the third exhaust gas does not pass smoothly through the regions having low porosity. In this case, the airflow tends to be concentrated in areas with relatively high porosity, and the airflow velocity may be reduced, thereby causing problems in processing performance.

In FIG. 4, porous ceramic particles are included in the catalyst aggregate 320 in order to solve the above-mentioned problem. The porous ceramic particles have a shape of ceramic foam and may have a spherical, cubical, rectangular parallelepiped, or conical shape. Also, the porous ceramic particles may have a size of 5 mm to 50 mm, and preferably a size of 5 mm to 20 mm (maximum diameter). When the maximum diameter of the porous ceramic particles is less than 5 mm, there are limitations in smoothly passing the third exhaust gas through the porous ceramic particles. On the other hand, when the maximum diameter of the porous ceramic particles is greater than 20 mm, there is a problem in that the catalytic reaction may not sufficiently occur. Also, the porous ceramic particles preferably have a porosity of 10 pores per inch (ppi) to 50 ppi. When the porosity is less than 10 ppi, the airflow does not flow smoothly due to the low porosity. On the other hand, when the porosity is greater than 50 ppi, the airflow flows smoothly due to the high porosity, but there is a problem in that the mechanical strength of the porous ceramic particles is reduced.

The catalyst aggregate 320 is composed of a mixture of catalyst particles 321 and airflow control particles 322. According to an example embodiment, the airflow control particles 322 may be included in an amount of 5% by volume to 50% by volume based on the catalyst aggregate 320.

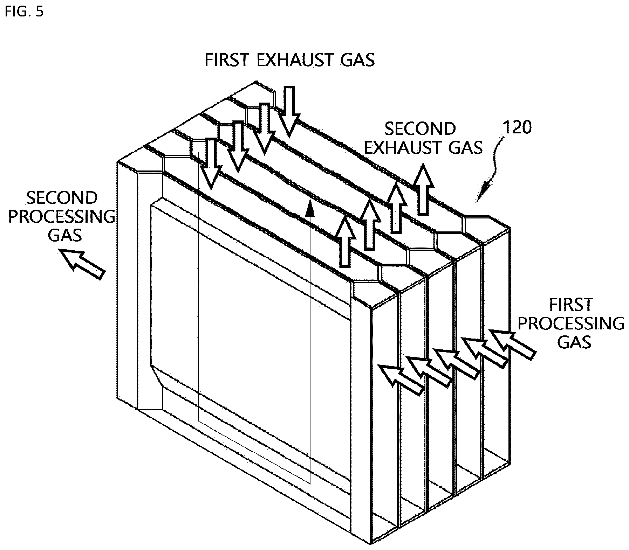

FIG. 5 is a perspective view showing a heat exchange unit according to a preferred example embodiment of the present invention.

Referring to FIG. 5, the heat exchange unit is provided with a plurality of heat transfer plates 120 in a form in which the heat transfer plates 120 are joined together. That is, the plurality of heat transfer plates 120 do not have a baffle for controlling the airflow, and heat transfer plates 120 having the same shape are provided in a form in which the heat transfer plates 120 are joined together.

The first processing gas having a temperature of 650°C to 740°C is introduced into the sides of the heat transfer plates 120, and the first processing gas is cooled by passing through the heat transfer plates 120. As a result, a second processing gas having a temperature range of 230°C to 280°C is discharged. The directions in which the first processing gas and the second processing gas flow are the same.

Also, the first exhaust gas having a relatively low temperature or room temperature is introduced at the top of the heat transfer plate 120 and flows downward in the space between the heat transfer plates 120. The first exhaust gas flows along the bottom surface of the heat exchange unit in the same or opposite direction relative to the first processing gas at the bottom of the space between the heat transfer plates 120 in a state in which the bottom surface of the heat exchange unit is sealed or blocked and is then discharged toward the top of the heat transfer plate 120 after forming an airflow flowing toward the top of the heat exchanger plate 120. Through this, the first exhaust gas is heated and formed into a second exhaust gas having a temperature range of 470°C to 520°C, and the second exhaust gas is discharged from the heat exchange unit.

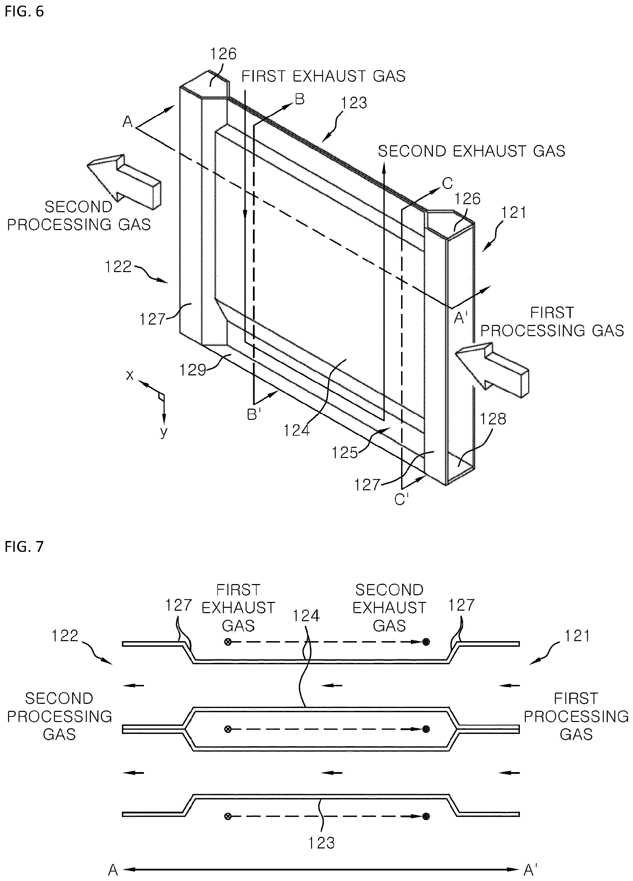

FIG. 6 is a perspective view showing the heat transfer plate of FIG. 5 according to a preferred example embodiment of the present invention.

Referring to FIG. 6, the heat transfer plate has a high-temperature gas inlet 121, a high-temperature gas outlet 122, a low-temperature gas inlet/outlet 123, a heat transfer unit 124, and a low-temperature gas guide unit 125.

The first processing gas is introduced through the high-temperature gas inlet 121. For the introduction of the first processing gas, an upper cover 126, a side cover 127, and a lower cover 128 are provided to form an open space on one side. The first processing gas is introduced through the open space formed on the side, and the first processing gas flows inside the heat transfer unit.

In the heat transfer unit, the first processing gas performs a heat exchange operation to raise the temperature of the first exhaust gas while flowing in the x direction, thereby forming the second processing gas whose temperature has been reduced. The second processing gas is discharged through the high-temperature gas outlet 122 on the opposite side. Also, for smooth discharge of the second processing gas, the high-temperature gas outlet 122 has an upper cover 126, a lower cover 128, and a side cover 127. In particular, it is preferable that the high-temperature gas inlet 121 and high-temperature gas outlet 122 have a symmetrical structure with the same configuration.

Also, the high-temperature gas inlet 121 and high-temperature gas outlet 122 are directly joined to the high-temperature gas inlets and the high-temperature gas outlets of the adjacent heat transfer plates without any space therebetween. Through this configuration, the heat transfer plates may be densely disposed, and heat transfer efficiency may be enhanced.

The low-temperature gas inflow/outlet 123, the heat transfer unit 124, and the low-temperature gas guide unit 125 are disposed between the high-temperature gas inlet 121 and the high-temperature gas outlet 122. The low-temperature gas inflow/outlet 123 is formed in an upper region of the heat transfer plate, the heat transfer unit 124 is disposed at the center of the heat transfer plate, and the low-temperature gas guide unit 125 is disposed at a lower portion of the heat transfer plate.

The first exhaust gas is introduced from the top through the low-temperature gas inflow/outlet 123, and the airflow is formed in the y-direction. The temperature of the first exhaust gas is raised as the first exhaust gas flows downward along the surface of the heat transfer unit 124. The first exhaust gas flowing downward along the surface of the heat transfer unit 124 enters the low-temperature gas guide unit 125. The first exhaust gas, which cannot be discharged downward due to a bottom shield plate 129, flows along the bottom shield plate 129 in the x direction or -x direction, and collides with the side cover 127 disposed on the bottom of the high-temperature gas inlet 121 to form an upward airflow. Accordingly, the first exhaust gas flows in the y direction to perform a primary temperature-raising operation, and flows in the -y direction to perform a secondary temperature-raising operation in order to form the second exhaust gas whose temperature is raised. Therefore, the efficiency of heat exchange is enhanced.

FIG. 7 is a cross-sectional view taken along line AA' of the shape in which two heat transfer plates of FIG. 6 are joined together according to a preferred example embodiment of the present invention.

Referring to FIG. 7, the first processing gas is introduced through the high-temperature gas inlet 121, and the temperature of the exhaust gas is raised as the first processing gas flows through the space inside the heat transfer unit 124. Also, the first processing gas is discharged through the high-temperature gas outlet 122, which occupies a relatively larger cross-sectional area than the heat transfer unit 124. At this time, the first exhaust gas is introduced in a direction perpendicular to the direction of the first processing gas. The heat transfer unit 124 connects the high-temperature gas inlet 121 to the high-temperature gas outlet 122 to form a fluid path for the first processing gas.

In particular, the temperature of the first exhaust gas is primarily raised as the first exhaust gas is introduced into a region close to the high-temperature gas outlet 122. Also, the first exhaust gas is introduced into the low-temperature gas guide unit having a separation distance greater than the separation distance between the heat transfer units 124, moves in a direction opposite to the traveling direction of the processing gas, and then is re-introduced into the space between the heat transfer units 124 from the region close to the high-temperature gas inlet 121. Accordingly, the temperature of the first exhaust gas is secondarily raised through the heat transfer unit 124, and the first exhaust gas is discharged in a direction opposite to its inflow direction.

In particular, the first exhaust gas needs to be introduced from a region adjacent to the high-temperature gas outlet 122. That is, it is desirable that the airflow of the exhaust gas forms a path from the upper region near the high-temperature gas outlet 122 to the low-temperature gas guide unit near the high-temperature gas outlet 122 to the low-temperature gas guide unit near the high-temperature gas inlet 121 to the upper region near the high-temperature gas inlet 121.

When the exhaust gas is introduced in an opposite direction adjacent to the high-temperature gas inlet 121, a primary temperature-raising operation through the heat transfer unit 124 occurs smoothly, but a secondary temperature-raising operation does not occur smoothly due to the second processing gas whose temperature has been reduced in the high-temperature gas outlet 122, and the efficiency of the heat exchange operation is reduced.

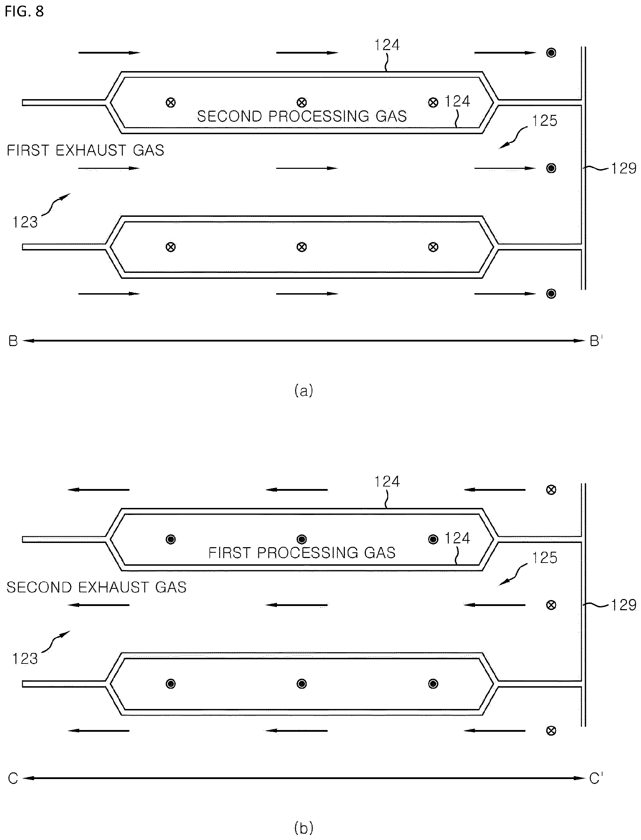

FIG. 8 shows cross-sectional views taken along line BB' and line CC' of the shape in which two heat transfer plates of FIG. 6 are joined together according to a preferred example embodiment of the present invention.

Referring to FIG. 8A, the first exhaust gas is introduced through the low-temperature gas inflow/outlet 123, and the temperature of the first exhaust gas is primarily raised as the first exhaust gas comes into contact with the heat transfer unit 124. The processing gas flows toward the ground inside the heat transfer unit 124. The temperature of the exhaust gas flowing on the surface of the heat transfer unit 124 is primarily raised by the heat transfer unit 124, and the airflow collides with the bottom shield plate 129 of the low-temperature gas guide unit 125 and flows in an outflow direction from the ground.

Referring to FIG. 8B, the exhaust gas whose temperature is primarily raised, which has collided with the bottom shield plate 129, flows through the low-temperature gas guide unit 125, collides with a lower side cover of the high-temperature gas inlet to flow through the space between the heat transfer units 124. Accordingly, a secondary temperature-raising operation is performed through the heat transfer unit 124. The secondary temperature-raising operation is achieved while allowing the exhaust gas whose temperature has been primarily raised to flow through the space between the heat transfer units 124. In particular, as shown in FIG. 8B, since the exhaust gas flows near the high-temperature gas inlet, the temperature-raising operation is easily performed due to the first processing gas having a higher temperature than the high-temperature gas outlet.

The heat exchange unit can raise the temperature of the target exhaust gas to be treated in two stages. Therefore, the temperature of the exhaust gas can be increased through the heat exchange action compared to the existing heat exchange actions, and the exhaust gas is introduced into the heating part of the heater unit in a state in which the temperature of the exhaust gas is sufficiently raised. Also, as the exhaust gas is heated using a flame, the heating part rapidly raises the temperature of the exhaust gas, thereby improving the reactivity with catalyst particles. In addition, the catalyst unit is directly connected to the heating part and does not require any separate piping. Therefore, the high-temperature exhaust gas heated by the heating part can be quickly introduced into the catalyst unit to decompose perfluorinated compounds and nitrous oxide through reactions. In particular, the catalyst aggregate in the catalyst unit may include airflow control particles. Due to the airflow control particles made of porous ceramic particles, the flow of the exhaust gas in the catalyst aggregate can occur smoothly, thereby preventing an airflow blockage or concentration phenomenon.

According to the present invention described above, the heat exchange unit can raise the temperature of the target exhaust gas to be treated in two stages. Therefore, the temperature of the exhaust gas can be increased through the heat exchange action compared to the existing heat exchange actions, and the exhaust gas is introduced into the heating part of the heater unit in a state in which the temperature of the exhaust gas is sufficiently raised. Also, as the exhaust gas is heated using a flame, the heating part rapidly raises the temperature of the exhaust gas, thereby improving the reactivity with catalyst particles. In addition, the catalyst unit is directly connected to the heating part and does not require any separate piping. Therefore, the high-temperature exhaust gas heated by the heating part can be quickly introduced into the catalyst unit to decompose perfluorinated compounds and nitrous oxide through reactions. In particular, the catalyst aggregate within the catalyst unit may include airflow control particles. Due to the airflow control particles made of porous ceramic particles, the flow of the exhaust gas in the catalyst aggregate can occur smoothly, thereby preventing an airflow blockage or concentration phenomenon.

While the example embodiments of the present invention and their advantages have been described in detail, it should be understood that various changes, substitutions and alterations may be made herein without departing from the scope of the invention.

### [Description of Reference Numerals]

| | | | |
|---|---|---|---|
| 100: | heat exchange unit | 200: | heater unit |
| 210: | flame forming part | 220: | heating part |
| 230: | exhaust gas supply part | 300: | catalyst unit |
| 310: | partition | 320: | catalyst aggregate |
| 410: | outer housing | 420: | inner housing |
| 430: | insulating material | | |

## Claims

1. A catalyst system, comprising:
a heat exchange unit configured to raise the temperature of a first exhaust gas, which includes perfluorinated compounds and nitrous oxide, in two stages to form a second exhaust gas;
a heater unit into which the second exhaust gas is introduced and in which the temperature of the second exhaust gas is raised by a flame to form a third exhaust gas; and
a catalyst unit integrally formed with the heater unit and configured to remove the perfluorinated compounds and the nitrous oxide in the third exhaust gas to form a first processing gas,
wherein the first processing gas is introduced into the heat exchange unit and is formed into a cooled second processing gas, and the outflow directions of the first exhaust gas and the second exhaust gas, which are introduced into the heat exchange unit, are opposite to each other.

2. The catalyst system of claim 1, wherein the heat exchange unit is provided with a plurality of heat transfer plates in a state in which the heat transfer plates are joined together, the first processing gas is introduced into a side of the heat transfer plate so that the second processing gas whose temperature has been reduced is discharged to the other side of the heat transfer plate, the first exhaust gas is introduced in a direction perpendicular to the airflow direction of the first processing gas, and the second exhaust gas is discharged in a direction opposite to the first exhaust gas.

3. The catalyst system of claim 2, wherein the heat transfer plate includes:
a high-temperature gas inlet into which the first processing gas is introduced;
a high-temperature gas outlet which faces the high-temperature gas inlet and through which the second processing gas is discharged;
a heat transfer unit disposed between the high-temperature gas inlet and the high-temperature gas outlet to allow the first processing gas to flow therethrough and configured to raise the temperature of the first exhaust gas flowing on the surface in two stages;
a low-temperature gas inflow/outlet located on the heat transfer unit and through which the first exhaust gas is introduced and the second exhaust gas is discharged; and
a low-temperature gas guide unit which faces the low-temperature gas inflow/outlet and into which the first exhaust gas is introduced to allow the first exhaust gas to flow in a direction opposite to the first processing gas.

4. The catalyst system of claim 3, wherein the heat transfer plate further includes a bottom shield plate configured to collide with the introduced first exhaust gas and guide the airflow direction of the first exhaust gas in a direction opposite to that of the first processing gas.

5. The catalyst system of claim 3, wherein the first exhaust gas is introduced adjacent to the high-temperature gas outlet, and the second exhaust gas is discharged adjacent to the high-temperature gas outlet.

6. The catalyst system of claim 1, wherein the heater unit includes:
a flame forming part coupled to an outer housing and configured to form a flame;
a heating part into which the flame is introduced and which is configured to heat the second exhaust gas introduced into the heating part in an inner housing to form the third exhaust gas; and
an exhaust gas supply part disposed between the outer housing and the inner housing and configured to supply the second exhaust gas to the heating part.

7. The catalyst system of claim 6, wherein the catalyst unit is integrally formed with the heating part so that the catalyst unit is installed in the inner housing.

8. The catalyst system of claim 6, wherein the catalyst unit includes:
partitions arranged in a zigzag pattern in a vertical direction to accommodate the third exhaust gas and alternately having open spaces at an upper or lower portion thereof; and
a catalyst aggregate configured to fill a space between the partitions.

9. The catalyst system of claim 8, wherein when the exhaust gas supply part is disposed above the heating part, the partition configured to initially accommodate the third exhaust gas has an open space at the lower portion thereof.

10. The catalyst system of claim 8, wherein the catalyst aggregate includes catalyst particles to decompose the perfluorinated compounds and the nitrous oxide, and the catalyst particles include a perovskite oxide of the following Compositional Formula 1, zinc aluminate, and a binder:
[Compositional Formula 1] LaₓSrₓ₋₁O₃
wherein x ranges from 0.4 to 0.8.

11. The catalyst system of claim 10, wherein the catalyst aggregate further includes airflow control particles made of porous ceramic particles to control the fluid velocity of the third exhaust gas.

12. The catalyst system of claim 11, wherein the airflow control particles include porous silica, porous alumina, or porous zirconia and have a porosity of 10 ppi to 50 ppi.

13. A catalyst system comprising:
a heat exchange unit configured to raise the temperature of a first exhaust gas, which includes perfluorinated compounds and nitrous oxide, in two stages to form a second exhaust gas;
a heater unit into which the second exhaust gas is introduced and in which the temperature of the second exhaust gas is raised by a flame to form a third exhaust gas;
a catalyst unit integrally formed with the heater unit and configured to remove the perfluorinated compounds and the nitrous oxide in the third exhaust gas to form a first processing gas;
an inner housing in which a heating part of the heater unit and the catalyst unit are installed; and
an outer housing which is installed outside the inner housing and to which a flame forming part of the heater unit is coupled,
wherein an insulating material is filled between the outer housing and the inner housing, and an exhaust gas supply part of the heater unit is installed between the inner housing and the inner housing to supply the second exhaust gas to the heating part.

14. The catalyst system of claim 13, wherein the catalyst unit includes:
partitions configured to move the airflow of the third exhaust gas in a zigzag pattern in a vertical direction; and
a catalyst aggregate configured to fill a space between the partitions,
wherein the third exhaust gas is allowed to flow in the space between the catalyst particles in the catalyst aggregate.

15. The catalyst system of claim 14, wherein the catalyst particles include 4 to 30 parts by weight of a perovskite oxide represented by the following Compositional Formula 2 and 0.5 to 20 parts by weight of a binder based on 100 parts by weight of zinc aluminate:
[Compositional Formula 2] LaₓSrₓ₋₁O₃
wherein x ranges from 0.4 to 0.8.

16. The catalyst system of claim 14, wherein the catalyst aggregate further include airflow control particles made of porous ceramic particles to control the fluid velocity of the third exhaust gas.

17. The catalyst system of claim 16, wherein the porous ceramic particles include porous silica, porous alumina, or porous zirconia and are included in an amount of 5% by volume to 50% by volume relative to the catalyst aggregate.

18. The catalyst system of claim 17, wherein the porous ceramic particles have a size of 5 mm to 20 mm.
